# EUROPEAN PATENT SPECIFICATION

(11) **EP 4 662 481 B1**
(45) Date of publication and mention of the grant of the patent: **05.08.2026**
(21) Application number: 24703386.3
(22) Date of filing: 07.02.2024
(51) Int. Cl.: G01N 21/71, G01J 3/02

(54) **METHOD AND EXAMINATION DEVICE FOR DETERMINING THE CHEMICAL COMPOSITION OF USED REFRACTORY MATERIAL**
VERFAHREN UND UNTERSUCHUNGSVORRICHTUNG ZUR BESTIMMUNG DER CHEMISCHEN ZUSAMMENSETZUNG VON GEBRAUCHTEM FEUERFESTEM MATERIAL
PROCÉDÉ ET DISPOSITIF D'EXAMEN POUR DÉTERMINER LA COMPOSITION CHIMIQUE D'UN MATÉRIAU RÉFRACTAIRE USAGÉ

(30) Priority: 09.02.2023 EP 23155874
(43) Date of publication of application: 17.12.2025
(73) Proprietor: Refractory Intellectual Property GmbH & Co. KG, 1100 Wien (AT)
(72) Inventor: LEITNER, Alexander, 8733 St.Marein-Feistritz (AT); KÖNIGSHOFER, Sandra, 8605 St. Lorenzen (AT); MÖRKENS, Volker, 52393 Hürtgenwald (DE); MAKOWE, Joachim, 52066 Aachen (DE)
(74) Representative: Eibel, Anna
(86) International application number: PCT/EP2024/053078
(87) International publication number: WO 2024/165632

(56) References cited:
- US-A1- 2021 381 975
- CONNEMANN SVEN ET AL: "Automated LIBS-based classification for spent refractories from the steel industry for high-value recycling", 1 January 2016 (2016-01-01), XP093054811, Retrieved from the Internet <URL:https://zenodo.org/record/211819/files/Automated%20LIBS-Based%20classification%20for%20spent%20refractories%20from%20the%20steel%20industry%20for%20high-value%20recycling.pdf?download=1> [retrieved on 20230615]
- HORCKMANS LIESBETH ET AL: "Recycling of refractory bricks used in basic steelmaking: A review", RESOURCES, CONSERVATION AND RECYCLING, vol. 140, 1 January 2019 (2019-01-01), AMSTERDAM, NL, pages 297 - 304, XP093004456, ISSN: 0921-3449, DOI: 10.1016/j.resconrec.2018.09.025
- CROCOMBE RICHARD A.: "Portable Spectroscopy", vol. 72, no. 12, 18 October 2018 (2018-10-18), US, pages 1701 - 1751, XP055929632, ISSN: 0003-7028, Retrieved from the Internet <URL:http://journals.sagepub.com/doi/full-xml/10.1177/0003702818809719> DOI: 10.1177/0003702818809719
- REINHARD NOLL ET AL: "Recycling of refractory bricks used in basic steelmaking: A review", JOURNAL OF ANALYTICAL ATOMIC SPECTROMETRY, vol. 33, no. 6, 1 January 2018 (2018-01-01), pages 945 - 956, XP055653738, ISSN: 0267-9477, DOI: 10.1039/C8JA00076J
- J. RAKOVSKÝ ET AL: "A review of the development of portable laser induced breakdown spectroscopy and its applications", SPECTROCHIMICA ACTA. PART B: ATOMIC SPECTROSCOPY., vol. 101, 1 November 2014 (2014-11-01), US, pages 269 - 287, XP055649717, ISSN: 0584-8547, DOI: 10.1016/j.sab.2014.09.015
- MOROS JAVIER ET AL: "Refractory residues classification strategy using emission spectroscopy of laser-induced plasmas in tandem with a decision tree-based algorithm", ANALYTICA CHIMICA ACTA, vol. 1191, 1 January 2022 (2022-01-01), AMSTERDAM, NL, pages 339294, XP093054766, ISSN: 0003-2670, DOI: 10.1016/j.aca.2021.339294

## Description

The current disclosure relates to a method and examination device for determining the chemical composition of a used refractory material specimen.

Refractory products such as bricks, tiles etc. may comprise carbon, e.g., when using magnesia-carbon (MgO-C) materials, alumina-magnesia-carbon (Al₂O₃-MgO-C; AMC) materials or doloma-carbon (MgO-CaO-C) materials. Refractory products may also be free of carbon, e.g., in the case of products based on fired magnesia or high alumina. The specific choice of raw materials for a refractory product may depend on its application and the position in the lining of a metallurgical vessel.

Used refractory products or parts thereof can be recycled. For this purpose, different types of refractory bricks, tiles etc., originally installed in several metallurgical vessels in various lining areas and having different physical and chemical composition are dismantled and normally stored together. To allow refeeding of used refractory products or parts thereof into refractory production while ensuring high quality of the resulting products in demanding applications, efficient sorting and separating steps according to different characteristics are needed. In this regard, the chemical composition of a material is considered as primary characteristic, whereas density, thermal conductivity, color etc. are considered as secondary characteristics.

X-ray based methods in general are reliable to determine the chemical composition of a sample without contact. However, a major drawback of X-ray based methods is that light elements, such as Al, Mg, Si, Ca or C cannot be reliably detected in acceptable measurement times (< 1s). Moreover, X-ray based methods typically require strict regulations in terms of work safety and radiation protection due to the ionizing radiation involved. In addition, for coarse-textured materials, several measurements per sample must be carried out and averaged to obtain satisfactory results. Also, methods based on X-ray fluorescence might be prone to surface contamination due to small interaction volumes of the sample, whereas, in case of methods based on X-ray transmission, samples must have a thickness which is sufficiently small.

The publications: Connemann, Sven et al: "Automated LIBS-based classification for spent refractories from the steel industry for high-value recycling", 7th Sensor-Based Sorting & Control 2016, pages 119-127, 23 February 2016, ISBN: 978-3-8440-4323-5; and Horckmans Liesbeth et al: "Recycling of refractory bricks used in basic steelmaking: a review", Resources, Conservation and Recycling, vol. 140, pages 297-304, 1 January 2019, ISSN: 0921-3449; each discuss the application of LIBS analysis for the sorting of refractories.

Because of the limitations of known methods, often sorting is still performed manually by a human operator, wherein the quality of sorting depends solely on the operator's experience. In consequence, the throughput and the resulting sorting quality usually is low, in that only a low number of individual sorting classes is manageable in this way. In addition, manual sorting is limited to larger fragments, i.e., full bricks or pieces having a particle size larger than 80 mm which usually constitutes only about 40% of the total available used material. Furthermore, some refractory product types cannot be sorted manually because of insufficient visual or morphological differences between them.

Used refractory products might also be contaminated by slag, metal (e.g., iron) or other unwanted material. Therefore, it might be advantageous to comminute used refractory material and pre-sort said crushed refractory material - e.g., by magnetic separation of ferrous parts - prior to the main sorting step.

It is an objective of the invention to provide a method and an examination device for determining the chemical composition of used refractory materials to allow sorting and recycling and to achieve a low- or zero-waste concept.

This is achieved in that during a breakdown step a pulsed laser beam is irradiated by a laser source onto an examination section of a used refractory material specimen to form a plasma in said examination section, wherein during a recording step by a detection unit spectral emission of said examination section is recorded, wherein during an evaluation step by an evaluation unit the chemical composition in the examination section is determined using spectral lines of the recorded spectral emission, wherein during the evaluation step a spectral line at a wavelength of about 193 nm is used to determine the carbon content in the examination section, and the chemical composition of the used refractory material specimen is determined by using said chemical composition in the examination section. In the context of this disclosure the term "specimen" refers to a single individual piece or fragment of used refractory products.

Furthermore, the abovementioned objective is achieved by an examination device comprising a laser source, configured to irradiate a pulsed laser beam onto an examination section of the refractory material specimen to form a plasma in said examination section during a breakdown step. The examination device also comprises a detection unit, configured to record spectral emission from the examination section during a recording step, and an evaluation unit, configured to determine during an evaluation step the chemical composition in the examination section using the recorded spectral emission while during the evaluation step using a spectral line at a wavelength of about 193 nm to determine the carbon content in the examination section, wherein the chemical composition of the used refractory material specimen is determined from said chemical composition in the examination section.

During the examination step while determining the chemical composition of the used refractory material specimen in the examination section at least the carbon content is determined by using a spectral line at a wavelength of about 193 nm. So, determining the carbon content is at least part of determination of the chemical composition. Also, other elements present in the examination section can be determined by investigating spectral lines at wavelengths which are characteristic for said other elements and thus also determination of the content of those other elements might be part of determination of the chemical composition.

The method and examination device disclosed herein can also be used for determining the carbon content of a used refractory material specimen. So, during a breakdown step a pulsed laser beam is irradiated by a laser source onto an examination section of the used refractory material specimen to form a plasma in said examination section, during a recording step by a detection unit spectral emission of said examination section is recorded, during an evaluation step by an evaluation unit the carbon content in the examination section is determined using a spectral line at a wavelength of about 193 nm of the recorded spectral emission and the carbon content of the used refractory material specimen is determined by using said carbon content in the examination section.

"About 193 nm" means that 193.0 nm, but also a minimally shifted wavelength according to the measurement parameters (composition and pressure of surrounding gas, temperature etc.), can be used. For example, a wavelength of 193.09 nm can be used as this is the spectral line of carbon under vacuum conditions. Preferably an integral is formed in the 193 nm range, e.g., from 192.8 to 193.2 nm.

The examination section is located on a specimen of the used refractory material to be investigated. When the pulsed laser beam irradiates the examination section a plasma of locally ablated material is formed by electronic excitation of atoms and ions in said examination section. The examination section is transiently heated to temperatures exceeding 10.000 K and material is evaporated from the surface of the specimen to depths in the range of some 100 µm up to some mm. The examination section might have a cone-shaped form. Pulsed laser beams having a pulse duration in the nanosecond range and having a pulse energy of some 100 µJ up to some 100 mJ can be used, wherein the focus area preferably has a diameter of less than 1 mm. The dimension of the used refractory material specimen to be examined is preferably larger than the focus area. The pulsed laser beam can generate an irradiance in the range of 1 GW/cm² in its focus area. Nd:YAG lasers might be used as laser source. Forming a plasma by using a (focused) pulsed laser beam followed by optical emission spectroscopy of the induced plasma is commonly known as "Laser-induced Breakdown Spectroscopy" (LIBS) or sometimes also called "Laser-induced Plasma Spectroscopy" (LIPS). By using LIBS, a lateral spatial resolution better than 0.5 mm can be achieved.

As former methods for determination of the chemical composition of used refractory material could only be applied on sufficiently large specimens with characteristic dimensions larger than 80 mm, smaller pieces could not be recycled and only be used for landfilling or downcycling instead. By using LIBS, single particle analysis is performed and also the chemical composition of small fragments (i.e., with characteristic dimensions equal to or smaller than 80 mm) can be determined, which in turn makes those fragments available for recycling instead of landfilling or downcycling. The minimum particle size of used refractory specimens that can be analyzed with LIBS is in principle limited by the dimension of the laser focal spot and therefore particle sizes starting from 2 mm ranging up to 200 mm and more can be analyzed. Generally also specimen smaller than the laser focal spot can be analyzed. According to the method described herein it is possible to analyze the chemical composition of used refractory material on-site, directly in the processing line under real time circumstances. This use case is also called inline analysis. Using LIBS, no elaborate pre-processing of the specimen is necessary and only a microscopic amount of material is ablated.

According to the method described herein carbon is detected by using a spectral line at a wavelength of about 193 nm to determine the carbon content in the examination section. In general, carbon can be detected from spectral emission by processing the spectral line at a wavelength of 247.856 nm, but this spectral line only has a low sensitivity and, more importantly, is disturbed by an iron spectral line at a wavelength of 247.857 nm. As typical spectrometers only offer a spectral resolution of 0.02 - 0.3 nm it is not possible to differentiate between the wavelengths of 247.856 nm and 247.857 nm. Due to these reasons, the 247.856 nm spectral line is only usable for detecting large concentrations of carbon and only if the material is free of iron or has only a negligible iron content. As used refractory materials might contain significant amounts of carbon in the range of several mass-% and might also contain iron, the 247.856 nm spectral line is not used on its own. Nevertheless, it is still possible to use the spectral line at a wavelength of 247.856 nm as secondary input when evaluating the carbon content by mainly using the signal at a wavelength of about 193 nm.

Preferably the carbon content in the examination section is determined by using an auxiliary spectral line at an auxiliary wavelength of the recorded spectral emission. This is particularly relevant if oxygen is present in the examination section, as both carbon and oxygen have a spectral line at about 193 nm. So, the carbon content in the examination section can still be determined by using an auxiliary spectral line at an auxiliary wavelength of the recorded spectral emission, preferably an auxiliary spectral line of oxygen, e.g., at a wavelength of about 777 nm. "About 777 nm" means that 777.0 nm, but also a minimally shifted wavelength according to the measurement parameters (composition and pressure of surrounding gas, temperature etc.), can be used. Preferably an integral of the measured signal is calculated in the 777 nm range, e.g., from 776 to 778 nm. The content of oxygen contained in air surrounding the examination section, which also absorbs radiation at around 193 nm can be determined by using a spectral line at a wavelength of about 777 nm and this information can be used to reduce the impact of oxygen at the wavelength of 193 nm by a correction scheme as follows. The oxygen content determined via the spectral line at a wavelength of 777 nm can be used to correct the spectral line obtained at a wavelength of about 193 nm to obtain the carbon content in the examination section. Therefore, it is not necessary to use a protective inert gas atmosphere (e.g., argon or nitrogen) and/or a closed housing to prevent oxygen influences.

Summarizing the above, at a wavelength of about 193 nm an aggregated value for carbon and oxygen content in the examination section can be determined, e.g., by integrating over spectral lines from 192.8 to 193.2 nm. Auxiliary spectral lines at a wavelength of about 777 nm can be used to determine a value for the oxygen content in the examination section, e.g., by integrating from 776 to 778 nm. Said auxiliary spectral lines can then be used to correct the spectral lines at about 193 nm to obtain the carbon content in the examination section, e.g., by subtraction of the value for oxygen content from the aggregated value for carbon and oxygen content.

During the examination step while determining the chemical composition of the used refractory material specimen in the examination section, not only the carbon content can be determined (by using a spectral line at a wavelength of about 193 nm as described above), but also other elements present in the examination section can be determined by investigating spectral lines at wavelengths which are characteristic for said other elements, such as, e.g., Al (309,3 nm), Mg (279,6 nm), Si (390,6 nm), Ca (396,8 nm). Wavelengths in the spectral range of 175 - 1000 nm can be recorded for this purpose. Here also integrals in the range of the expected wavelengths can be used.

Preferably during a preselection step the examination section is specified by an imaging unit. Therefore, the examination device may comprise an imaging unit for preselecting the examination section. The preselection can be based on one or more of the following properties: size, volume, surface topography, optical spectrum (with a lower spectral resolution compared to LIBS) etc.

Either the imaging unit used for the preselection step or a further imaging unit can be used for a pre-analyzing step, wherein one or more of the following properties of the specimen can be considered for pre-analysis: size, volume, surface topography, optical spectrum (with a lower spectral resolution compared to LIBS). The results from the pre-analyzing step might already allow for a determination of the chemical composition of the used refractory specimen and/or can be used for supporting the analysis performed by LIBS, e.g., if the specimen shows very different chemical composition, like MgO-C mixed with chamotte.

The difference between the optional preselection step and the optional pre-analyzing step, both using an (and possibly the same) imaging unit is as follows: the preselection step can be provided to analyze the used refractory specimen to select the proper examination section on which the LIBS measurement is performed in a subsequent step, whereas the pre-analyzing step analyzes the used refractory specimen to determine properties. The properties can help to determine the chemical composition, or they can be used to support the LIBS analyses. The properties can also be used for the sorting of used refractory material specimens, as described further below.

A color and/or hyperspectral camera may be used as imaging unit for the preselection and/or pre-analyzing step. A hyperspectral camera allows usage of a hyperspectral imaging method (HSI). As the HSI provides only little spectral and lateral resolution this method alone might not be reliable enough for determining the chemical composition of the used refractory material specimen on its own but might be used during a pre-analyzing step to support the LIBS measurements. On the other hand, the HSI is very suitable for preselection, i.e., for determining an examination section which is best suited for executing the breakdown step, i.e., the local plasma generation step for LIBS.

During the preselection step e.g., an examination section which has specific optical surface features, e.g., the largest optical homogeneous portion, can be determined. Optical properties can be an indication for specific chemical composition.

A 3D-camera enables 3D object recognition, wherein e.g., the volume, topography and shape of the used refractory material specimen can be determined. By using this information, a suitable examination section can be determined during a preselection step and/or a pre-analyzing step can be performed to obtain properties of the used refractory material specimen, such as the characteristics of dismantled and crushed material (e.g., a geometric aspect ratio and/or shape factor). The shape of the pieces in turn can provide first hints regarding various characteristics of said used refractory material and support the determination of the chemical composition and the material classification via LIBS.

The examination section can be pre-treated by a cleaning step, preferably by a laser-cleaning step performed by the laser source and/or a second laser source irradiating a cleaning laser beam onto the examination section prior to the irradiation of the pulsed laser beam for the LIBS measurement. Accordingly, the laser source and/or a second laser source can be configured to irradiate a cleaning laser beam onto the examination section prior to the irradiation of the pulsed laser beam. The cleaning laser beam can have repetition frequencies ranging from 100 to 200 kHz, wherein the repetition frequency of the breakdown laser can be in the range from 10 to 100 Hz. Providing a cleaning step can help to remove surface contaminations existing at the examination section. Of course, the cleaning step does not have to be limited to the examination section only and can also cover only parts of it or also a larger area of the specimen.

The breakdown step, the recording step and the evaluation step can be executed for a plurality of examination sections of the used refractory material specimen, wherein the chemical composition of the used refractory material specimen is determined from the results of the evaluation step in the plurality of examination sections. For this purpose the laser source can be configured to irradiate a pulsed laser beam onto a plurality of examination sections of the refractory material specimen to form a plasma in said plurality of examination sections, wherein the detection unit can be configured to record the spectral emissions from the plurality of examination sections and wherein the evaluation unit can be configured to determine the chemical composition in the plurality of examination sections, wherein the examination device further comprises a merging unit which is configured to determine the chemical composition of the used refractory material specimen from the determined chemical compositions in the plurality of examination sections. This can be done by interpolation or averaging, e.g., by a merging unit which can be part of the evaluation unit.

So, LIBS measurements can be used on a plurality of examination sections of a used refractory material specimen to determine the chemical composition in those examination sections whereby the chemical composition of the used refractory material specimen is determined therefrom. By doing so, an improved representative determination of the chemical composition of the used refractory material of said specimen is possible even when said chemical composition is distributed inhomogeneously across the specimen. In this regard executing a preselection step for determining the plurality of examination sections can increase the speed and quality of the analyzing method.

A refractory sorting system can comprise an examination device as described herein wherein the examination device is configured to determine the chemical composition of a plurality of refractory material specimens, and further comprising a sorting unit, configured to sort said plurality of used refractory material specimens based on their chemical composition during a sorting step. The sorting step based on the chemical composition can be performed by using a decision tree or an artificial intelligence (AI) and/or machine-learning (ML) algorithm. The carbon content and also the content of other elements (e.g., Al, Mg, Si, Ca etc.) or different ratios between them can be used as criteria for the sorting decision. If a pre-analyzing step is provided, the sorting step can also be based on results from said pre-analyzing step.

Preferably, the refractory sorting system may comprise a transport unit, e.g., a conveyor belt, for transporting the plurality of used refractory material specimens. The refractory sorting system may also comprise a feeding unit for feeding the used refractory material specimens to the transportation unit, wherein the feeding unit further may comprise a feeding hopper and/or a vibration chute. The refractory sorting system can also comprise a control unit which is connected to the examination device and controls the sorting unit based on the results obtained from the evaluation unit. The control unit might also control the transport unit, if used.

Fig. 1 to 5b show exemplary, and non-limiting schematics of advantageous embodiments of the invention wherein
- Fig. 1: shows an exemplary examination device examining one examination section of the refractory material specimen,
- Fig. 2: shows examination of a plurality of examination sections,
- Fig. 3: shows an exemplary sorting system,
- Fig. 4a,b: shows a sections of exemplary spectral emissions,
- Fig. 5a,b: shows exemplary processing of said spectral emission.

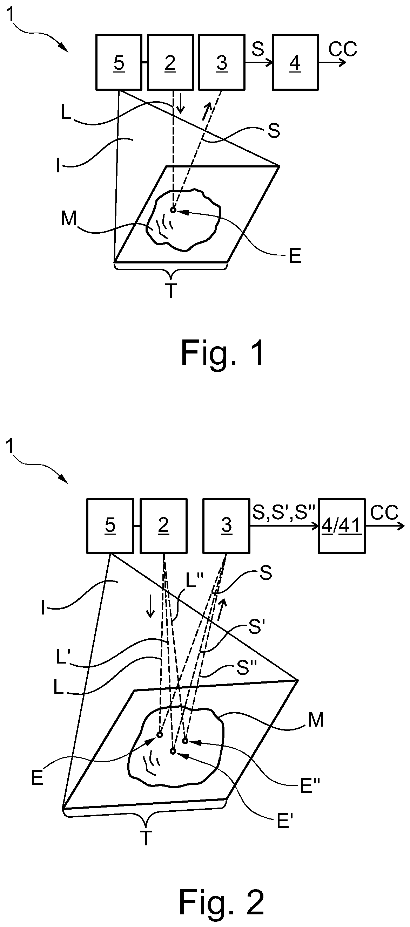

Figure 1 shows an exemplary examination device 1 for determining the chemical composition CC of a used refractory material specimen M. For doing so, said used refractory material specimen M having at least partially unknown chemical composition CC is positioned at a target area T. The examination device 1 comprises a laser source 2, configured to irradiate a pulsed breakdown laser beam L onto an examination section E of the refractory material specimen M positioned in the target area T to form a plasma in said examination section E during a breakdown step. Preferably the examination section E is specified by a preselection step. The examination device 1 further comprises a detection unit 3, configured to record spectral emission S from the examination section E during a recording step. Also, the examination device 1 comprises an evaluation unit 4, configured to determine the chemical composition in the examination section E using the spectral emission S recorded during a recording step, wherein the carbon content is determined in the examination section E by using a spectral line at a wavelength of about 193 nm (which here overlaps with an oxygen spectral line). The carbon content in the examination section E can then be corrected by using an auxiliary spectral line at another wavelength of the spectral emission, e.g., an auxiliary spectral line of oxygen, preferably at a wavelength of 777 nm. Also, the chemical composition with respect to one or more of the elements Al, Mg, Si, Ca can be determined in the examination section E by investigating characteristic spectral lines of the spectral emission S recorded.

The chemical composition CC of the used refractory material specimen M can be determined from the chemical composition of the examination section E. Provided the chemical composition CC of the used refractory material specimen M is homogeneous, the determination of the chemical composition of the examination section E can be sufficient to extrapolate the chemical composition CC of the used refractory material specimen M.

Figure 1 also shows an optional imaging unit 5, preferably a color and/or hyperspectral camera, which can record images I of the used refractory material specimen M which can be used for executing the preselection of the examination section E in a preselection and/or for performing a pre-analyzing step. By preselecting a suitable examination section E in a preselection step, the determination of the chemical composition CC of the used refractory material specimen M from the chemical composition of the examination section E can be optimized.

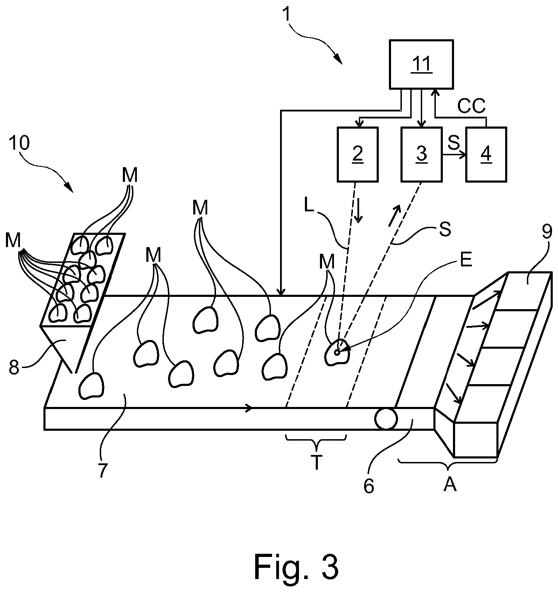

A control unit 11 can be provided to control the examination device 1 (and therefore the laser source 2, the detection unit 3 and the evaluation unit 4) - not shown in Fig. 1 and Fig. 2, but in Fig. 3.

Preferably the breakdown step, the recording step and the evaluation step are executed for a plurality of examination sections E, E', E" of the used refractory material specimen M as indicated in Fig. 2. Each examination section E, E', E" is irradiated by a pulsed breakdown laser beam L, L', L" and leads to spectral emissions S, S', S" which are recorded by the detection unit 3. The chemical composition CC of the used refractory material specimen M can then be determined from the chemical compositions resulting from the evaluation steps at the examination sections E, E', E", e.g., by interpolation or averaging, even when the chemical compositions at the examination sections E, E' and E" differ from each other within the used refractory specimen M. This can be done by a merging unit 41, e.g., being part of the evaluation unit 4.

The examination section E (or examination sections E, E', E") might also be pre-treated during a cleaning step, preferably during a laser-cleaning step (not shown in the figures) performed by the laser source 2 or a second laser source irradiating a high frequency pulse modulated cleaning laser beam at the examination section E (or at the examination sections E, E', E"), before irradiating the breakdown laser beam L.

Figure 3 shows an exemplary sorting system 10 comprising an examination device 1 according to this disclosure, here by way of example the examination device 1 depicted in Fig. 1 (the imaging unit 5 is not depicted in Fig. 3), wherein a plurality of used refractory specimens M is examined. The refractory sorting system 10 by way of example also comprises a transport unit 7, here a conveyor belt, for transporting the plurality of used refractory material specimens M to the target area T. The used refractory material specimens M can be fed to the transport unit 7 by a hopper 8 as indicated in Fig. 3. The examination device 1 is positioned such that the laser source 2 is able to irradiate a pulsed breakdown laser beam L onto the examination section E of the used refractory material specimens M positioned in the target area T. For this reason, the used refractory material specimens M are transported to the target area T by means of the transport unit 7.

As described above, a plasma is formed by the breakdown laser beam L in said examination section E during the breakdown step, spectral emission S from the examination section E is recorded during a recording step by the detection unit 3 and during an evaluation step the chemical composition in the examination section E is determined by an evaluation unit 4 using the spectral emission S recorded during the recording step.

Individual classes of material can be assigned to the used refractory material specimens M based on their chemical composition CC. The classes of material can not only be determined by using the high-resolution spectral signature based on the LIBS measurement positions but also based on results from the preselection step, e.g., the surface topography, the specimen volume, the large-area surface spectral signature in low spectral resolution (e.g., by means of HSI).

During a sorting step a sorting unit 6 sorts said used refractory material specimens M, e.g., by moving these into containers 9 assigned to respective classes of material. This can be performed by an ejection unit (indicated by arrows in Fig. 3) located in an ejection area A located after the target area T. The ejection unit can comprise robot arms and/or gas nozzles for moving the used refractory specimens M into containers 9.

A control unit 11 can be provided to control the examination device 1 (and therefore the laser source 2, the detection unit 3 and the evaluation unit 4), but also might control the transport unit 7. Preferably, the control unit 11 also controls the sorting unit 6 based on the results obtained from the evaluation unit 4.

The movement of the transport unit 7 can be stopped or slowed down by the control unit 11 during the breakdown step and/or the detection step. It is also possible that the movement of the transport unit 7 is not stopped or slowed down in which case the movement of the examination section E is handled by the control unit 11 while controlling the breakdown step and/or the detection step, e.g., by ensuring the pulsed breakdown laser beam L follows the examination section E.

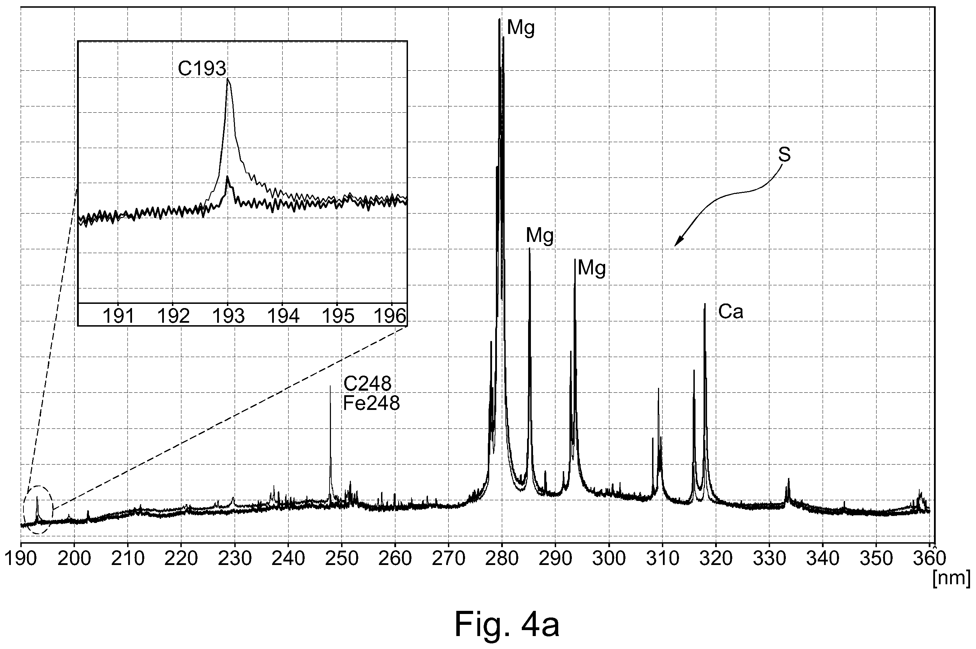

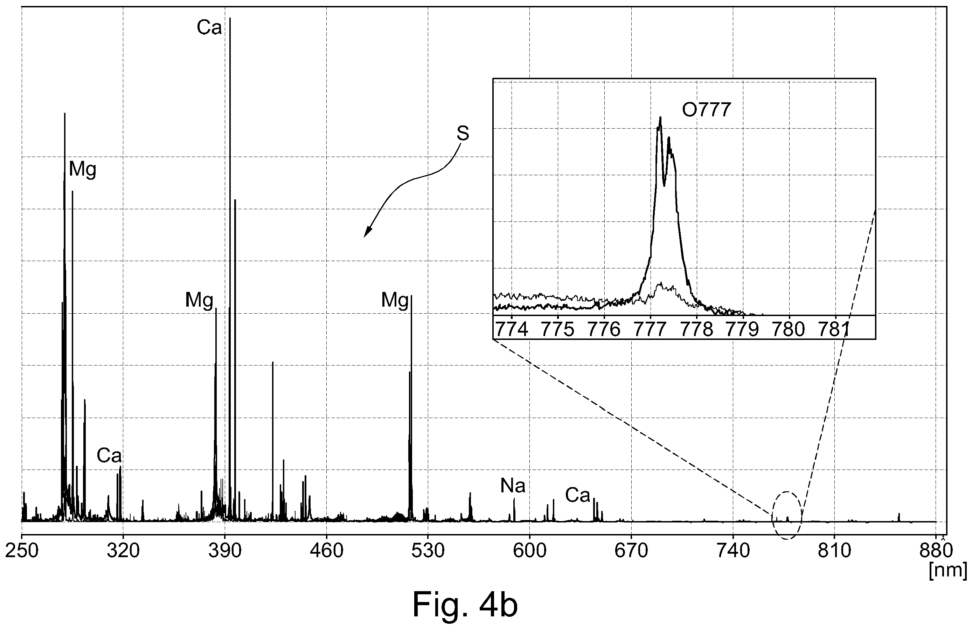

Figs. 4a and 4b shows a comparison of two exemplary spectral emissions S of two different examination sections E of two different used refractory material specimens M, wherein Fig. 4a shows the spectral emission between a wavelength of 190 nm and 360 nm and Fig. 4b shows the spectral emission between a wavelength of 250 and 880 nm. The following steps can be executed simultaneously or consecutively for both specimens M.

For each specimen M, a pulsed laser beam L is irradiated by a laser source 2 onto the respective examination section E during a breakdown step to form a plasma in said examination sections E. During respective recording steps spectral emissions S of said examination sections E were recorded by a detection unit 3. The thickness of the curves in Fig. 4a, b showing the respective spectral emission lines is different for easier differentiation between said spectral emissions S.

The thinner spectral emission lines origin from a first examination section E from a first specimen M of a MgO-C material comprising 1% by mass of carbon. The thicker spectral emission lines origin from a second examination section E from a second specimen M of a MgO material comprising <0.1% by mass of carbon.

In particular, carbon spectral lines at about 193 nm are indicated in Fig. 4a and oxygen spectral lines at about 777 nm are indicated in Fig. 4b. In Fig. 4a a magnification of both spectral lines around 193 nm and in Fig. 4b a magnification of both spectral lines around 777 nm is shown. Also, various spectral lines for Na, Mg and Ca are visible in Fig. 4a, b.

For both specimens M in Fig. 4b a clearly visible spectral line at 248 nm is displayed, but as said spectral line might originate from iron or from carbon, this spectral line cannot be used to determine the carbon content of the respective examination section E.

The carbon content can now be determined by using the spectral line at the wavelength of about 193 nm. This can be performed by integrating over the spectral lines around the wavelength of 193 nm to determine an aggregated value *va* for the carbon and oxygen content in the respective examination section E. By integrating over auxiliary spectral lines at a wavelength of 776 nm to 778 nm a value for an oxygen content *vO* in the respective examination section E can be determined. Said determined value for oxygen content vOcan then be used to correct the aggregated value *va* to obtain a value for the carbon content in the respective examination section E, e.g., by adding or subtracting a correction value *vx* proportional to the oxygen content *vO* to or from the aggregated value *va* for carbon and oxygen content. By doing this the carbon content in the respective examination section E can be determined and further the chemical composition CC of the respective used refractory material specimen M can be determined.

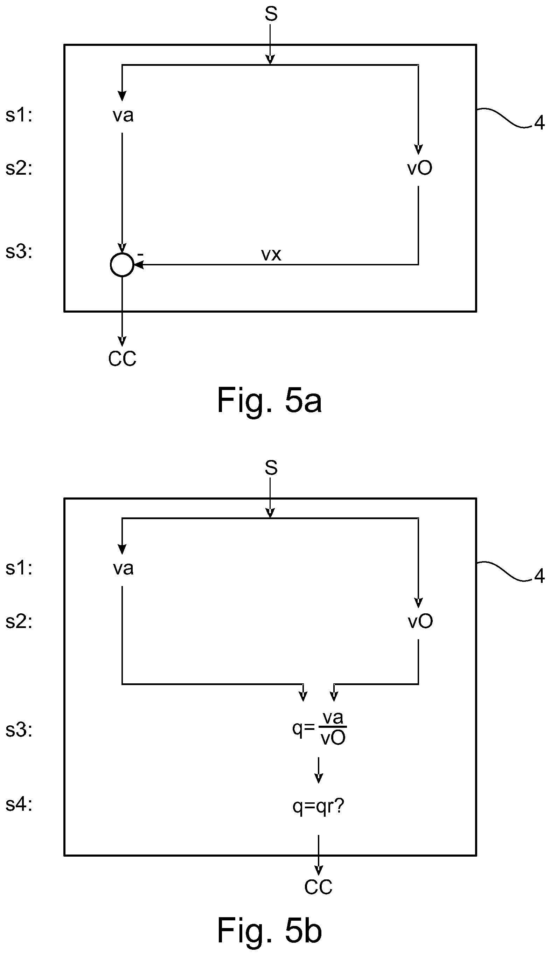

Figure 5a shows exemplary processing of the spectral emission S, performed by the evaluation unit 4. In a first step s1 the aggregated value *va* for carbon and oxygen content in the respective examination section E is determined, e.g., by integrating over the spectral lines around the wavelength of 193 nm. In a second step s2 a value *vO* for the oxygen content in the respective examination section E is determined, e.g., by integrating over auxiliary spectral lines from a wavelength of 776 nm to 778 nm. The first step s1 and the second step s2 can be done in arbitrary sequence or consecutively.

In a third step s3 the value for oxygen content *vO* is used to correct the aggregated value *va* in order to obtain a value for the carbon content in the examination section E, e.g., by subtracting a correction value *vx* derived from the determined oxygen content *vO.* As a result, the chemical composition in regard to the carbon content can be determined in the respective examination section E.

Likewise, the content of Na, Mg, and Ca can be determined by using spectral lines at the respective wavelengths, e.g., by integrating over spectral lines around the respective wavelengths. This can be used to further determine the chemical composition in the examination section E.

The chemical composition CC of the used refractory material specimen M can then be extrapolated from the chemical composition in the examination section E, which is also performed during the third step s3 in Fig. 5a.

Also, a quotient q can be calculated by dividing the aggregated value *va* for carbon and oxygen (determined at about 193 nm) by the value for oxygen content *vO* (determined at about 777 nm) and then it can be used for determining the chemical composition in the respective examination section E which again can be used for determining the chemical composition CC of the refractory material specimen M.

Figure 5b shows exemplary processing of the spectral emission S, performed by the evaluation unit 4. Like in Fig. 5a in a first step s1, again, the aggregated value *va* for carbon and oxygen content in the examination section E is determined.

Also like in Fig. 5a, in a second step s2 values *vO* for the oxygen content in the examination section E is determined. The first step s1 and the second step s2 again can be done in arbitrary sequence or consecutively.

In a third step s3 now a quotient *q* is calculated dividing the aggregated value *va* by the value *vO* for the oxygen content for the examination section E.

In a fourth step s4 the quotient q is compared to one or more reference quotients *qr* of known material having known chemical composition and thus the chemical composition of the examination section E is determined and further the chemical composition CC of the refractory material specimen M is determined.

The steps shown in Fig. 5a and Fig. 5b can be performed for each examination section E.

By processing both spectral emissions S from Fig. 4, quotients *q* for each examination sections E can be calculated. Thus, it can be determined that the first examination section has 10 times the carbon content of the second examination section. So, if a reference quotient *qr* for a reference material having a reference carbon content is known, the carbon content for any examination section E can be determined by comparing the respective quotient *q* for said examination section E with the reference quotient *qr*. Thus, a quotient *q* of about 2 might lead to the result that the material of the examination section E is MgO-C, which has an assigned reference quotient *qr* of 2, wherein a quotient *q* of about 0.2 can lead to the result that the material of the examination section E is MgO, which has an assigned reference quotient *qr* of 0.2. Of course, ranges of the reference quotient *qr* can in general be assigned to either MgO-C (e.g., a range from 0.5 to 4) or MgO (e.g., a range from 0 to 0.5). This method also can be applied on other materials. Determining the quotients q can also be used to determine if one of two (or more) materials having different carbon content are present in any examination section E. For example, if it should be determined if the examination section E comprises MgO or MgO-C, the abovementioned quotient q can be determined for said examination section E and can then be compared to one or both reference quotients *qr* assigned to MgO and/or MgO-C to determine which material is present in the examination section E. The chemical compositions CC of the refractory material specimens M can be determined from the chemical composition determined in the respective examination section E.

The analysis described above is done for two examination sections E in two different refractory material specimens M only by way of example and to show the different chemical composition of those examination sections E. Of course, also only one or more than two examination sections E of one or more refractory material specimens M can be analyzed simultaneously or consecutively.

The analysis described above can also be used for a plurality of spectral emissions S of a plurality of examination sections E of the same used refractory material specimen M and/or a plurality of spectral emissions S of a plurality of examination sections E of another used refractory material specimen M. The chemical composition CC of the used refractory material specimens M is determined from the results of said evaluation steps of said plurality of examination sections E.

## Claims

1. Method for determining the chemical composition (CC) of a used refractory material specimen (M), wherein during a breakdown step a pulsed laser beam (L) is irradiated by a laser source (2) onto an examination section (E) of the used refractory material specimen (M) to form a plasma in said examination section (E), wherein during a recording step by a detection unit (3) spectral emission (S) of said examination section (E) is recorded, wherein during an evaluation step by an evaluation unit (4) the chemical composition in the examination section (E) is determined using spectral lines of the recorded spectral emission (S), **characterized in that** during the evaluation step a spectral line at a wavelength of about 193 nm is used to determine the carbon content in the examination section (E), and the chemical composition (CC) of the used refractory material specimen (M) is determined by using said chemical composition in the examination section (E), **and that** the carbon content in the examination section (E) is determined by using an auxiliary spectral line at an auxiliary wavelength of the recorded spectral emission, wherein an auxiliary spectral line of oxygen, preferably at a wavelength of about 777 nm, is used.

2. Method according to claim 1, wherein during a preselection step the examination section (E) on the used refractory material specimen (M) is determined by an imaging unit (5), preferably by a color and/or hyperspectral camera.

3. Method according to claim 1 or 2, wherein the spectral lines of the spectral emission (S) recorded of one or more of the following further elements are used to determine the chemical composition in the examination section (E) regarding said further elements in the examination section (E): Al, Mg, Si, Ca, and the chemical composition (CC) of the used refractory material specimen (M) is determined by using said chemical composition in the examination section (E)..

4. Method according to one of claims 1 to 3, wherein the examination section (E) is pre-treated during a cleaning step, preferably during a laser-cleaning step performed by the laser source (2) and/or a second laser source irradiating a cleaning laser beam onto the examination section (E) prior to the emission of the breakdown laser beam (L).

5. Method according to one of claims 1 to 4, wherein the breakdown step, the recording step and the evaluation step are executed for a plurality of examination sections (E, E', E") of the used refractory material specimen (M), **and that** the chemical composition (CC) of the used refractory material specimen (M) is determined from the results of said evaluation steps of said plurality of examination sections (E, E', E").

6. Examination device (1) for determining the chemical composition (CC) of a used refractory material specimen (M), the examination device (1) comprising a laser source (2), configured to irradiate a pulsed laser beam (L) onto an examination section (E) of the refractory material specimen (M) to form a plasma in said examination section (E) during a breakdown step, the examination device (1) further comprising a detection unit (3), configured to record spectral emission (S) from the examination section (E) during a recording step, wherein the examination device (1) comprises an evaluation unit (4), configured to determine during an evaluation step the chemical composition in the examination section (E) using the recorded spectral emission (S)**,** the examination device being **characterised in** being configured to use during the evaluation step a spectral line at a wavelength of about 193 nm to determine the carbon content in the examination section (E), and to determine the chemical composition (CC) of the used refractory material specimen (M) by using said chemical composition in the examination section (E) while the carbon content in the examination section (E) is determined by using an auxiliary spectral line at an auxiliary wavelength of the recorded spectral emission, the auxiliary wavelength being the wavelength of a spectral line of oxygen, preferably a wavelength of about 777 nm.

7. Examination device (1) according to claim 6, wherein the laser source (2) and/or a second laser source is configured to irradiate a cleaning laser beam onto the examination section (E) during a cleaning step prior to the breakdown step.

8. Examination device (1) according to one of claims 6 or 7, wherein the examination device (1) comprises an imaging unit (5), preferably a color and/or hyperspectral camera, configured to preselect the examination section (E).

9. Examination device (1) according to one of claims 6 to 8, wherein the laser source (2), is configured to irradiate a pulsed laser beam (L, L', L") onto a plurality of examination sections (E, E', E") of the refractory material specimen (M) to form a plasma in said plurality of examination sections (E, E', E"), **that** the detection unit (3) is configured to record spectral emissions (S, S', S") from the plurality of examination sections (E, E', E"), **that** the evaluation unit (4) is configured to determine the chemical composition in the plurality of examination sections (E, E', E") using the recorded spectral emissions (S, S', S"), **and that** the examination device (1) comprises a merging unit (41) which is configured to determine the chemical composition (CC) of the used refractory material specimen (M) from the determined chemical compositions in the plurality of examination sections (E, E', E").

10. Refractory sorting system (10) comprising an examination device (1) according to one of claims 6 to 9 wherein the examination device (1) is configured to determine the chemical composition of a plurality of used refractory material specimens (M), and further comprising a sorting unit (6), configured to sort said plurality of used refractory material specimens (M) based on their chemical composition (CC) during a sorting step.

11. Refractory sorting system (10) according to claim 10, comprising a transport unit (7), preferably a conveyor belt, for transporting the plurality of used refractory material specimens (M).

12. Refractory sorting system (10) according to claim 11, comprising a feeding unit (8) for feeding the plurality of used refractory material specimens (M) to the transport unit (7).

## Patentansprüche

1. Verfahren zur Bestimmung der chemischen Zusammensetzung (CC) einer Probe eines gebrauchten feuerfesten Materials (M), wobei während eines Aufschlüsselungsschritts ein gepulster Laserstrahl (L) von einer Laserquelle (2) auf einen Untersuchungsabschnitt (E) der Probe des gebrauchten feuerfesten Materials (M) eingestrahlt wird, um in dem genannten Untersuchungsabschnitt (E) ein Plasma zu bilden, wobei während eines Aufzeichnungsschritts durch eine Detektionseinheit (3) eine spektrale Emission (S) des genannten Untersuchungsabschnitts (E) aufgezeichnet wird, wobei während eines Auswertungsschritts durch eine Auswertungseinheit (4) die chemische Zusammensetzung in dem Untersuchungsabschnitt (E) unter Verwendung von Spektrallinien der aufgezeichneten spektralen Emission (S) bestimmt wird, **dadurch gekennzeichnet, dass** während des Auswertungsschritts eine Spektrallinie bei einer Wellenlänge von etwa 193 nm verwendet wird, um den Kohlenstoffgehalt in dem Untersuchungsabschnitt (E) zu bestimmen, und die chemische Zusammensetzung (CC) der Probe des gebrauchten feuerfesten Materials (M) unter Verwendung der genannten chemischen Zusammensetzung in dem Untersuchungsabschnitt (E) bestimmt wird, **und dass** der Kohlenstoffgehalt in dem Untersuchungsabschnitt (E) unter Verwendung einer Hilfsspektrallinie bei einer Hilfswellenlänge der aufgezeichneten spektralen Emission bestimmt wird, wobei eine Hilfsspektrallinie von Sauerstoff, vorzugsweise bei einer Wellenlänge von etwa 777 nm, verwendet wird.

2. Verfahren nach Anspruch 1, wobei in einem Vorauswahlschritt der Untersuchungsabschnitt (E) an der Probe des gebrauchten feuerfesten Materials (M) durch eine Bildgebungseinheit (5), vorzugsweise durch eine Farb- und/oder Hyperspektralkamera, bestimmt wird.

3. Verfahren nach Anspruch 1 oder 2, wobei die Spektrallinien der aufgezeichneten spektralen Emission (S) von einem oder mehreren der folgenden weiteren Elemente verwendet werden, um die chemische Zusammensetzung in dem Untersuchungsabschnitt (E) hinsichtlich der genannten weiteren Elemente in dem Untersuchungsabschnitt (E) zu bestimmen: Al, Mg, Si, Ca, und die chemische Zusammensetzung (CC) der Probe des gebrauchten feuerfesten Materials (M) unter Verwendung der genannten chemischen Zusammensetzung in dem Untersuchungsabschnitt (E) bestimmt wird.

4. Verfahren nach einem der Ansprüche 1 bis 3, wobei der Untersuchungsabschnitt (E) während eines Reinigungsschritts vorbehandelt wird, vorzugsweise während eines Laserreinigungsschritts, der durch die Laserquelle (2) und/oder eine zweite Laserquelle durchgeführt wird, welche einen Reinigungslaserstrahl auf den Untersuchungsabschnitt (E) vor der Emission des Aufschlüsselungslaserstrahls (L) einstrahlt.

5. Verfahren nach einem der Ansprüche 1 bis 4, wobei der Aufschlüsselungsschritt, der Aufzeichnungsschritt und der Auswertungsschritt für eine Vielzahl von Untersuchungsabschnitten (E, E', E") der Probe des gebrauchten feuerfesten Materials (M) durchgeführt werden und wobei die chemische Zusammensetzung (CC) der Probe des gebrauchten feuerfesten Materials (M) aus den Ergebnissen der Auswertungsschritte der mehreren Untersuchungsabschnitte (E, E', E") bestimmt wird.

6. Untersuchungsvorrichtung (1) zur Bestimmung der chemischen Zusammensetzung (CC) einer Probe eines gebrauchten feuerfesten Materials (M), wobei die Untersuchungsvorrichtung (1) eine Laserquelle (2) umfasst, die dazu eingerichtet ist, während eines Aufschlüsselungsschritts einen gepulsten Laserstrahl (L) auf einen Untersuchungsabschnitt (E) der Probe des feuerfesten Materials (M) einzustrahlen, um in dem genannten Untersuchungsabschnitt (E) ein Plasma zu bilden, wobei die Untersuchungsvorrichtung (1) ferner eine Detektionseinheit (3) umfasst, die dazu eingerichtet ist, während eines Aufzeichnungsschritts eine spektrale Emission (S) von dem Untersuchungsabschnitt (E) aufzuzeichnen, wobei die Untersuchungsvorrichtung (1) eine Auswertungseinheit (4) umfasst, die dazu eingerichtet ist, während eines Auswertungsschritts die chemische Zusammensetzung in dem Untersuchungsabschnitt (E) unter Verwendung der aufgezeichneten spektralen Emission (S) zu bestimmen, wobei die Untersuchungsvorrichtung **dadurch gekennzeichnet ist, dass** sie dazu eingerichtet ist, während des Auswertungsschritts eine Spektrallinie bei einer Wellenlänge von etwa 193 nm zu verwenden, um den Kohlenstoffgehalt in dem Untersuchungsabschnitt (E) zu bestimmen, und die chemische Zusammensetzung (CC) der Probe des gebrauchten feuerfesten Materials (M) unter Verwendung der genannten chemischen Zusammensetzung in dem Untersuchungsabschnitt (E) zu bestimmen, während der Kohlenstoffgehalt in dem Untersuchungsabschnitt (E) unter Verwendung einer Hilfsspektrallinie bei einer Hilfswellenlänge der aufgezeichneten spektralen Emission bestimmt wird, wobei die Hilfswellenlänge die Wellenlänge einer Spektrallinie von Sauerstoff ist, vorzugsweise eine Wellenlänge von etwa 777 nm.

7. Untersuchungsvorrichtung (1) nach Anspruch 6, wobei die Laserquelle (2) und/oder eine zweite Laserquelle dazu eingerichtet ist, während eines Reinigungsschritts vor dem Aufschlüsselungsschritt einen Reinigungslaserstrahl auf den Untersuchungsabschnitt (E) einzustrahlen.

8. Untersuchungsvorrichtung (1) nach einem der Ansprüche 6 oder 7, wobei die Untersuchungsvorrichtung (1) eine Bildgebungseinheit (5), vorzugsweise eine Farb- und/oder Hyperspektralkamera, umfasst, die dazu eingerichtet ist, den Untersuchungsabschnitt (E) vorauszuwählen.

9. Untersuchungsvorrichtung (1) nach einem der Ansprüche 6 bis 8, wobei die Laserquelle (2) dazu eingerichtet ist, einen gepulsten Laserstrahl (L, L', L") auf eine Mehrzahl von Untersuchungsabschnitten (E, E', E") der Probe des feuerfesten Materials (M) einzustrahlen, um in der genannten Mehrzahl von Untersuchungsabschnitten (E, E', E") ein Plasma zu bilden, wobei die Detektionseinheit (3) dazu eingerichtet ist, spektrale Emissionen (S, S', S") von der Mehrzahl von Untersuchungsabschnitten (E, E', E") aufzuzeichnen, wobei die Auswertungseinheit (4) dazu eingerichtet ist, die chemische Zusammensetzung in der Mehrzahl von Untersuchungsabschnitten (E, E', E") unter Verwendung der aufgezeichneten spektralen Emissionen (S, S', S") zu bestimmen, und wobei die Untersuchungsvorrichtung (1) eine Zusammenführungseinheit (41) umfasst, die dazu eingerichtet ist, die chemische Zusammensetzung (CC) der Probe des gebrauchten feuerfesten Materials (M) aus den bestimmten chemischen Zusammensetzungen in der Mehrzahl von Untersuchungsabschnitten (E, E', E") zu bestimmen.

10. Sortiersystem für feuerfestes Material (10), umfassend eine Untersuchungsvorrichtung (1) nach einem der Ansprüche 6 bis 9, wobei die Untersuchungsvorrichtung (1) dazu eingerichtet ist, die chemische Zusammensetzung einer Mehrzahl von Proben eines gebrauchten feuerfesten Materials (M) zu bestimmen, und ferner umfassend eine Sortiereinheit (6), die dazu eingerichtet ist, die genannte Mehrzahl von Proben eines gebrauchten feuerfesten Materials (M) basierend auf ihrer chemischen Zusammensetzung (CC) während eines Sortierschritts zu sortieren.

11. Sortiersystem für feuerfestes Material (10) nach Anspruch 10, umfassend eine Transporteinheit (7), vorzugsweise ein Förderband, zum Transportieren der Mehrzahl von Proben eines gebrauchten feuerfesten Materials (M).

12. Sortiersystem für feuerfestes Material (10) nach Anspruch 11, umfassend eine Zuführeinheit (8) zum Zuführen der Mehrzahl von Proben eines gebrauchten feuerfesten Materials (M) zu der Transporteinheit (7).

## Revendications

1. Procédé de détermination de la composition chimique (CC) d'un échantillon de matériau réfractaire usagé (M), dans lequel, pendant une étape de claquage, un faisceau laser pulsé (L) est irradié par une source laser (2) sur une section d'examen (E) de l'échantillon de matériau réfractaire usagé (M) afin de former un plasma dans ladite section d'examen (E), dans lequel, pendant une étape d'enregistrement, une émission spectrale (S) de ladite section d'examen (E) est enregistrée par une unité de détection (3), dans lequel, pendant une étape d'évaluation, la composition chimique dans la section d'examen (E) est déterminée par une unité d'évaluation (4) en utilisant des raies spectrales de l'émission spectrale enregistrée (S), **caractérisé en ce que** pendant l'étape d'évaluation, une raie spectrale à une longueur d'onde d'environ 193 nm est utilisée pour déterminer la teneur en carbone dans la section d'examen (E), et la composition chimique (CC) de l'échantillon de matériau réfractaire usagé (M) est déterminée en utilisant ladite composition chimique dans la section d'examen (E), **et en ce que** la teneur en carbone dans la section d'examen (E) est déterminée en utilisant une raie spectrale auxiliaire à une longueur d'onde auxiliaire de l'émission spectrale enregistrée, dans lequel une raie spectrale auxiliaire de l'oxygène, de préférence à une longueur d'onde d'environ 777 nm, est utilisée.

2. Procédé selon la revendication 1, dans lequel, lors d'une étape de présélection, la section d'examen (E) sur l'échantillon de matériau réfractaire usagé (M) est déterminée par une unité d'imagerie (5), de préférence par une caméra couleur et/ou hyperspectrale.

3. Procédé selon la revendication 1 ou 2, dans lequel les raies spectrales de l'émission spectrale (S) enregistrée d'un ou plusieurs des éléments supplémentaires suivants sont utilisées pour déterminer la composition chimique dans la section d'examen (E) concernant lesdits éléments supplémentaires dans la section d'examen (E) : AI, Mg, Si, Ca, et la composition chimique (CC) de l'échantillon de matériau réfractaire usagé (M) est déterminée en utilisant ladite composition chimique dans la section d'examen (E).

4. Procédé selon l'une des revendications 1 à 3, dans lequel la section d'examen (E) est prétraitée pendant une étape de nettoyage, de préférence pendant une étape de nettoyage laser réalisée par la source laser (2) et/ou une deuxième source laser irradiant un faisceau laser de nettoyage sur la section d'examen (E) avant l'émission du faisceau laser de claquage (L).

5. Procédé selon l'une des revendications 1 à 4, dans lequel l'étape de claquage, l'étape d'enregistrement et l'étape d'évaluation sont exécutées pour une pluralité de sections d'examen (E, E', E") de l'échantillon de matériau réfractaire usagé (M), et dans lequel la composition chimique (CC) de l'échantillon de matériau réfractaire usagé (M) est déterminée à partir des résultats desdites étapes d'évaluation de ladite pluralité de sections d'examen (E, E', E").

6. Dispositif d'examen (1) pour déterminer la composition chimique (CC) d'un échantillon de matériau réfractaire usagé (M), le dispositif d'examen (1) comprenant une source laser (2), configurée pour irradier un faisceau laser pulsé (L) sur une section d'examen (E) de l'échantillon de matériau réfractaire (M) afin de former un plasma dans ladite section d'examen (E) pendant une étape de claquage, le dispositif d'examen (1) comprenant en outre une unité de détection (3), configurée pour enregistrer une émission spectrale (S) provenant de la section d'examen (E) pendant une étape d'enregistrement, dans lequel le dispositif d'examen (1) comprend une unité d'évaluation (4), configurée pour déterminer pendant une étape d'évaluation la composition chimique dans la section d'examen (E) en utilisant l'émission spectrale enregistrée (S), le dispositif d'examen étant **caractérisé en ce qu'**il est configuré pour utiliser, pendant l'étape d'évaluation, une raie spectrale à une longueur d'onde d'environ 193 nm pour déterminer la teneur en carbone dans la section d'examen (E), et pour déterminer la composition chimique (CC) de l'échantillon de matériau réfractaire usagé (M) en utilisant ladite composition chimique dans la section d'examen (E), tandis que la teneur en carbone dans la section d'examen (E) est déterminée en utilisant une raie spectrale auxiliaire à une longueur d'onde auxiliaire de l'émission spectrale enregistrée, la longueur d'onde auxiliaire étant la longueur d'onde d'une raie spectrale de l'oxygène, de préférence une longueur d'onde d'environ 777 nm.

7. Dispositif d'examen (1) selon la revendication 6, dans lequel la source laser (2) et/ou une deuxième source laser est configurée pour irradier un faisceau laser de nettoyage sur la section d'examen (E) pendant une étape de nettoyage avant l'étape de claquage.

8. Dispositif d'examen (1) selon l'une des revendications 6 ou 7, dans lequel le dispositif d'examen (1) comprend une unité d'imagerie (5), de préférence une caméra couleur et/ou hyperspectrale, configurée pour présélectionner la section d'examen (E).

9. Dispositif d'examen (1) selon l'une des revendications 6 à 8, dans lequel la source laser (2) est configurée pour irradier un faisceau laser pulsé (L, L', L") sur une pluralité de sections d'examen (E, E', E") de l'échantillon de matériau réfractaire (M) afin de former un plasma dans ladite pluralité de sections d'examen (E, E', E"), dans lequel l'unité de détection (3) est configurée pour enregistrer des émissions spectrales (S, S', S") provenant de la pluralité de sections d'examen (E, E', E"), dans lequel l'unité d'évaluation (4) est configurée pour déterminer la composition chimique dans la pluralité de sections d'examen (E, E', E") en utilisant les émissions spectrales enregistrées (S, S', S"), et dans lequel le dispositif d'examen (1) comprend une unité de fusion (41) qui est configurée pour déterminer la composition chimique (CC) de l'échantillon de matériau réfractaire usagé (M) à partir des compositions chimiques déterminées dans la pluralité de sections d'examen (E, E', E").

10. Système de tri de matériaux réfractaires (10), comprenant un dispositif d'examen (1) selon l'une des revendications 6 à 9, dans lequel le dispositif d'examen (1) est configuré pour déterminer la composition chimique d'une pluralité d'échantillons de matériau réfractaire usagé (M), et comprenant en outre une unité de tri (6), configurée pour trier ladite pluralité d'échantillons de matériau réfractaire usagé (M) sur la base de leur composition chimique (CC) pendant une étape de tri.

11. Système de tri de matériaux réfractaires (10) selon la revendication 10, comprenant une unité de transport (7), de préférence une bande transporteuse, pour transporter la pluralité d'échantillons de matériau réfractaire usagé (M).

12. Système de tri de matériaux réfractaires (10) selon la revendication 11, comprenant une unité d'alimentation (8) pour alimenter la pluralité d'échantillons de matériau réfractaire usagé (M) vers l'unité de transport (7).
